# EUROPEAN PATENT APPLICATION

(11) **EP 2 910 778 A1**
(43) Date of publication of application: **26.08.2015**
(21) Application number: 12890383.8
(22) Date of filing: 19.12.2012
(51) Int. Cl.: F03D 7/04, F03D 9/00, F03D 11/04

(54) **WINDMILL AND METHOD FOR OPERATING SAME**

(71) Applicant: Mitsubishi Heavy Industries, Ltd., Tokyo 108-8215 (JP)
(72) Inventor: FUKAMI, Koji, Tokyo 108-8215 (JP); HONDA, Akihiro, Tokyo 108-8215 (JP)
(74) Representative: Intès, Didier Gérard André
(86) International application number: PCT/JP2012/082939
(87) International publication number: WO 2014/097429

(57) **Abstract**

A method for operating a two-bladed windmill equipped with a rotor containing two blades and a hub to which the two blades are attached, said method being equipped with: a pitch angle adjustment step wherein the pitch angle of the two blades is adjusted during a windstorm such that the chords of the two blades run in a direction orthogonal to the rotation plane of the rotor; and a rotor maintenance step wherein the rotor is maintained at an azimuth angle at which the two blades align in the horizontal direction

## Description

### [Technical Field]

The present disclosure relates to a wind turbine and an operation method of the wind turbine.

### BACKGROUND ART

In recent years, wind turbine generators (wind turbines) have been increased in size from a perspective of improving power output. Specifically, due to activation of the offshore wind turbine market, sizes of wind turbines are rapidly increasing.

As wind turbines get larger, the wind load which acts on the wind turbines during violent wind (e.g. high wind, air turbulence, and/or gust) increases as well. For this reason, a variety of techniques has been proposed for reducing the wind load during violent wind.

For an instance, Patent Literature 1 discloses a three-bladed wind turbine which is configured to let wind through by controlling pitch angles of the blades.

Also, as wind turbines get larger, the torque at the drive train of the wind turbines increases as well, and the weight of the nacelle which houses the drive train drastically increases because the drive train is designed on the premise of such large torque.

Moreover, although there is a design concept as one of the wind-load countermeasures in which blades are made thin to reduce the wind load, such design concept leads to a situation where it is difficult to ensure the stiffness of blades. That is, it is difficult to ensure the stiffness of blades while preventing blade weight from increasing at the same time, because ensuring blade stiffness leads to increase in the blade weight.

In addition, the increase of wind turbines in size also increases the cost of transporting wind turbine components including blades, and the cost of constructing wind turbines.

Under the circumstances described above, a two-bladed wind turbine with two blades coupled to the hub is being developed besides a three-bladed wind turbine, which is the present mainstream configuration.

As a two-bladed wind turbine is characterized by the maximum operation efficiency being achieved at higher tip speed, the torque at the drive train is smaller than that of a three-bladed wind turbine of the same power output. This contributes to reducing the nacelle weight of the two-bladed wind turbine.

Also, in a case of a two-bladed wind turbine, it is easier to ensure blade stiffness because the blades are thicker than a three-bladed wind turbine. Furthermore, a two bladed wind turbine includes fewer blades than a three-bladed wind turbine, and thus it is possible to reduce the cost of transporting wind turbine components including blades, and the cost of constructing wind turbines.

Patent Literature 2 discloses a two-bladed wind turbine which is configured to control pitch angles of the blades so that the two blades have different pitch angles during violent wind or in anticipation of violent wind.

In particular, the two-bladed wind turbine is configured to set the pitch angle of one blade to an angle which is sensitive to the change in wind direction (e.g. 0 degree), and the pitch angle of the other blade at an angle which lets the wind through (e.g. 90 degrees, or "feathering" position). By setting the pitch angle of one of the blades to an angle which is sensitive to the change in wind direction, the rotor yaws in accordance with the change in wind direction, thereby reducing the wind load on the wind turbine.

### [Citation List]

### [Patent Literature]

[PTL 1] JP2008-184932
[PTL 2] WO2001/071183

### SUMMARY

### [Technical Problem]

However, even more needs are rising for reducing wind load, due to the further increase of wind turbines in size. Thus, it is desirable to develop new wind-load reducing techniques which can substitute the known solutions described in Patent Literatures 1 and 2. When the wind load during violent wind gets smaller, the standard of design criteria for designing wind turbine components may be lowered, and thus it is possible to reduce the weight of wind turbine components as well as the costs.

In particular, a sudden maximum load due to the wind load during violent wind acts on the base of a tower which supports a rotor and a nacelle, which is one of the causes for the difficulty in designing a tower. Especially in floating wind turbines, there are strong needs for reducing the wind load during violent wind, since the inertia force load caused by rolling of floats due to waves during violent wind acts on the base of the tower in addition to the sudden maximum load due to the wind load during violent wind.

An object of at least one embodiment of the present invention is to provide a wind turbine and an operation method of the wind turbine, which makes it possible to efficiently reduce the wind load during violent wind.

### [Solution to Problem]

An operating method for a wind turbine according to at least one embodiment of the present invention is an operation method for a two-bladed wind turbine which comprises a rotor including two blades and a hub to which the two blades are coupled, and the operating method may include:
a pitch-angle adjusting step of adjusting pitch angles of the two blades such that chords of the two blades are substantially parallel to a perpendicular direction to a rotational plane of the rotor during violent wind; and
a rotor holding step of holding the rotor at an azimuth angle such that the two blades are substantially parallel to a horizontal direction during the violent wind.

According to the above operating method for a wind turbine, because the pitch angle of each blade is controlled so that the chords of the two blades are substantially along the perpendicular direction to the rotational plane of the rotor during violent wind, it is possible to let wind from the front of the rotor through. Also, during violent wind, the rotor is held at an azimuth angle such that each blade is along the horizontal direction, and thus, it is possible to reduce the lift caused by side wind from a direction other than a direction from the front of the rotor. Therefore, the wind load during violent wind can be efficiently reduced.

In contrast, in a three-bladed wind turbine, when one of the three blades is held substantially parallel to the horizontal direction by adjusting the azimuth angle of the rotor, it is impossible to hold the remaining two blades substantially parallel to the horizontal direction. That is, in a three-bladed wind turbine, for a geometric reason, at least two of the three blades cannot be held substantially parallel to the horizontal direction. Thus, lift is inevitably caused by side wind even though the pitch angle of each blade is adjusted so as to let the wind from the front of the rotor through. Therefore, it is difficult to reduce the wind load due to side wind from a direction other than a direction from the front of the rotor by the pitch controlling techniques for a three-bladed wind turbine disclosed in Patent Literature 1, even if the wind from the front of the rotor can be let through.

In some embodiments, in the rotor holding step, the rotor is held at the azimuth angle by using at least a braking force of a rotor brake applied to the rotor or a rotation shaft which is configured to rotate with the rotor. Also, in some embodiments, in the rotor holding step, the rotor is held at the azimuth angle by using at least a lock pin for locking the rotor or a rotation shaft which rotates with the rotor, the lock pin being configured to lock the rotor to a stationary member side of the two-bladed wind turbine. The rotor brake and the lock pin may be used together.

As described above, it is possible to securely hold the rotor at the azimuth angle by holding the rotor substantially stationary using at least one of the rotor brake or the lock pin.

In some embodiments, the two-bladed wind turbine is an up-wind wind turbine; tip portions of the two blades bend in a direction from a negative pressure surface (suction surface) side toward a positive pressure surface (pressure surface) side; in the pitch-angle adjusting step, the pitch angle is adjusted such that the positive pressure surfaces of the two blades face vertically downward; and in the rotor holding step, the rotor is held at the azimuth angle by using at least a restoring force caused by gravity forces on the two blades, the positive pressure surfaces of which are facing vertically downward. When holding the rotor at the azimuth angle, mechanical means such as a rotor brake or a lock pin may be used for holding the rotor substantially stationary, in addition to the restoring force caused by gravity forces on the two blades.

In another embodiment, the two-bladed wind turbine is a down-wind wind turbine; tip portions of the two blades bend in a direction from a positive pressure surface side toward a negative pressure surface side; in the pitch-angle adjusting step, the pitch angle is adjusted such that the negative pressure surfaces of the two blades face vertically downward; and in the rotor holding step, the rotor is held at the azimuth angle by using at least a restoring force caused by gravity forces on the two blades, the negative pressure surfaces of which are facing vertically downward. When holding the rotor at the azimuth angle, mechanical means such as a rotor brake or a lock pin may be used for holding the rotor substantially stationary, in addition to restoring force caused by gravity forces on the two blades.

In the above embodiments, when the rotor begins to rotate off from the azimuth angle, the restoring force caused by gravity forces on the two blades acts to bring the rotor back to the azimuth angle. Thus, it is possible to hold the rotor at the azimuth angle with a simple configuration.

In one embodiment, in the pitch-angle adjusting step, the angle between the chord of each of the two blades and the perpendicular direction is adjusted to 10 degrees or less.

In this manner, it is possible for each blade to efficiently let the wind from the front of the rotor through, thereby further reducing the wind load during violent wind.

In one embodiment, in the rotor holding step, the angle between the longitudinal direction of each of the two blades and the horizontal direction is adjusted to 5 degrees or less.

In this manner, it is possible to efficiently reduce the lift caused by side wind from a direction other than a direction from the front of the rotor, thereby further reducing the wind load during violent wind.

In some embodiments, the above operating method for a wind turbine further comprises a rotor moving step of moving the rotor downward during violent wind.

Since wind has a tendency to have higher wind speed at higher altitude, it is possible to reduce wind load more efficiently by moving the rotor downward during violent wind.

In one embodiment, the two-bladed wind turbine is an offshore wind turbine including at least one pair of floats floating on sea surface and at least one pair of towers for supporting together the rotor, each of the at least one pair of towers being installed on each of the at least one pair of floats, and, in the rotor moving step, the rotor is moved downward by distancing the at least one pair of floats from each other and rotating each of the at least one pair of towers around a rotor-side end of said each of the at least one pair of the towers.

Thus, it is possible to move the rotor downward without sinking the tower underwater.

In other embodiment, the two-bladed wind turbine is an offshore wind turbine and, in the rotor moving step, the rotor is moved downward by sinking at least a part of a tower of the offshore wind turbine undersea.

Thus, it is possible to move the rotor downward without making the configuration of the tower complicated.

A wind turbine according to at least one embodiment is a two-bladed wind turbine and the wind turbine may include:
a rotor including two blades and a hub to which the two blades are coupled;
a pitch-angle adjusting mechanism for adjusting pitch angles of the two blades;
a pitch controller for controlling the pitch-angle adjusting mechanism such that chords of the two blades are substantially parallel to a perpendicular direction of a rotational plane of the rotor during violent wind; and
a rotor holding mechanism for holding the rotor at an azimuth angle such that the two blades are substantially parallel to a horizontal direction during violent wind.

According to the above described wind turbine, during violent wind, pitch angles of the blades are controlled so that the chords of the two blades of the two-bladed wind turbine are along the perpendicular direction to the rotational plane of the rotor, and thus it is possible for each blade to let the wind from the front of the rotor through. Also, during violent wind, the rotor is held at an azimuth angle such that each blade is along the horizontal direction, and thus it is possible to efficiently reduce the lift caused by side wind from a direction other than a direction from the front of the rotor. Therefore, it is possible to efficiently reduce the wind load during violent wind.

Also, a wind turbine according to at least one embodiment is a two-bladed wind turbine of up-wind type and the wind turbine may include:
a rotor including two blades each of which has a tip portion that bends in a direction from a negative pressure surface side toward a positive pressure surface side, and a hub to which the two blades are coupled;
a pitch-angle adjusting mechanism for adjusting pitch angles of the two blades; and
a pitch controller for controlling the pitch-angle adjusting mechanism such that the positive pressure surfaces of the two blades face vertically downward during violent wind.

On the other hand, a wind turbine according to another embodiment is a two-bladed wind turbine of down-wind type and the wind turbine may include:
a rotor including two blades each of which has a tip portion that bends in a direction from a positive pressure surface side toward a negative pressure surface side, and a hub to which the two blades are coupled;
a pitch-angle adjusting mechanism for adjusting pitch angles of the two blades; and
a pitch controller for controlling the pitch-angle adjusting mechanism such that the negative pressure surfaces of the two blades face vertically downward during violent wind.

According to the above described wind turbines, during violent wind, pitch angles of the blades are controlled so that the chord of each of the two blades of the two-bladed wind turbine is along the perpendicular direction to the rotational plane of the rotor, and thus it is possible for each blade to let the wind from the front of the rotor through. On this occasion, in a case where the wind turbine is of an up-wind type, the pitch angles are adjusted so that the negative pressure surfaces of the two blades face vertically downward, the two blades having tip portions which bend in a direction from the negative pressure surface side to the positive pressure surface side, and in a case where the wind turbine is of a down-wind type, pitch angles are adjusted so that the positive pressure surfaces of the two blades face vertically downward, the two blades having tip portions which bend in a direction from the positive pressure surface side to the negative pressure surface side. As a result, the restoring force caused by gravity forces on the two blades stabilizes the rotor at an azimuth angle such that each blade is along the horizontal direction. Thus, during violent wind, the rotor is held at an azimuth angle such that each blade is substantially parallel to the horizontal direction, thereby reducing the lift caused by side wind from a direction other than a direction from the front of the rotor.

Therefore, it is possible to efficiently reduce the wind load during violent wind.

### [Advantageous Effects of the Invention]

According to at least one embodiment of the present invention, pitch angle of each blade is controlled so that the chords of the two blades of the two-bladed wind turbine are along the perpendicular direction to the rotational plane of the rotor during violent wind, and thus it is possible to efficiently let the wind from the front of the rotor through. Also, during violent wind, the rotor is held at an azimuth angle such that each blade is substantially parallel to the horizontal direction, and thus it is possible to reduce the lift caused by side wind from a direction other than a direction from the front of the rotor. Therefore, it is possible to efficiently reduce the wind load during violent wind.

### BRIEF DESCRIPTION OF DRAWINGS

[FIG. 1] Fig. 1 is an illustration of a wind turbine according to one embodiment of the present invention.
[FIG. 2] Fig. 2 is an illustration of a rotor of a wind turbine during electric generation according to one embodiment.
[FIG. 3] Fig. 3 is a cross-sectional view taken along line A-A of Fig. 2.
[FIG. 4] Fig. 4 is an illustration of a rotor of a wind turbine during violent wind according to one embodiment.
[FIG. 5] Fig. 5 is a cross-sectional view taken along line B-B of Fig. 4.
[FIG. 6] Fig. 6 is a perspective view of a wind turbine during violent wind according to one embodiment.
[FIG. 7] Fig. 7 is an illustration of a lock pin according to one embodiment.
[FIG. 8] Fig. 8 is an illustration of a rotor during violent wind according to one embodiment.
[FIG. 9] Fig. 9 is a cross-sectional view taken along line C-C of Fig. 8.
[FIG. 10A] Fig. 10A is an illustration of the generation mechanism of a restoring force caused by gravity forces of two blades.
[FIG. 10B] Fig. 10B is an illustration of the generation mechanism of a restoring force caused by gravity forces of two blades.
[FIG. 11A] Fig. 11A is an illustration of a two-bladed wind turbine in which a rotor can be moved downward according to one embodiment.
[FIG. 11B] Fig. 11B is an illustration of a two-bladed wind turbine in which a rotor can be moved downward according to one embodiment.
[FIG. 12] Fig. 12 is an illustration of a two-bladed wind turbine which is able to move a rotor 2 downward according to one embodiment.
[FIG. 13] Fig. 13 is a flow chart of a operation process of a two-bladed wind turbine according to one embodiment.
[FIG. 14] Fig. 14 is an illustration of a rotor during violent wind according to one embodiment.
[FIG. 15A] Fig. 15A is a cross-sectional view taken along line D-D of Fig. 14.
[FIG. 15B] Fig. 15B is a cross-sectional view taken along line E-E of Fig. 14.

### DETAILED DESCRIPTION

Embodiments of the present invention will now be described in detail with reference to the accompanying drawings.

However, the scope of the present invention is not limited to the following embodiments. It is intended that dimensions, materials, shape, its relative positions and the like shall be interpreted as illustrative only and not limitative of the scope of the present invention.

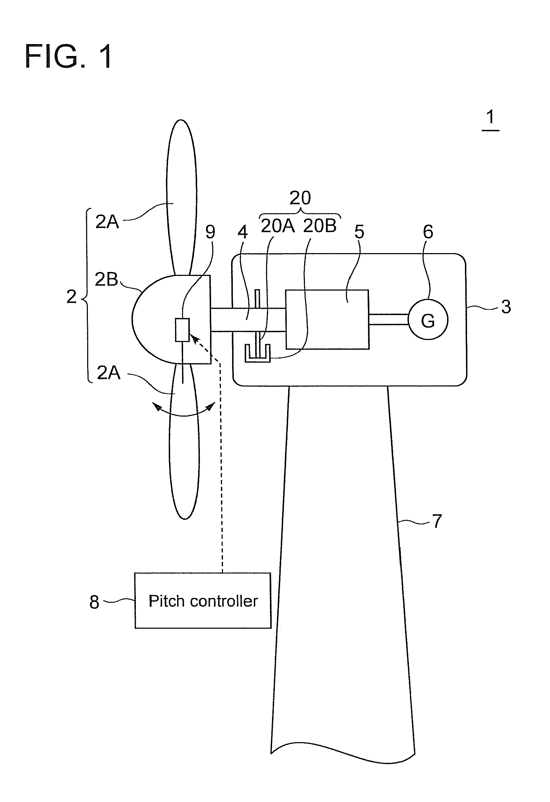

Fig.1 is an illustration of a wind turbine generator according to one embodiment of the present invention. A wind turbine 1 as illustrated in said drawing is a two-bladed wind turbine which comprises a rotor 2 including two blades 2A and a hub 2B to which the two blades 2A are coupled. In one embodiment, the two blades 2A radially extend from the hub 2B to the opposite direction from each other. The rotor 2 is configured to be rotated by lift caused by a pair of the blades 2A's receiving wind. In some embodiments, as illustrated in Fig. 1, the hub 2B of the rotor 2 is connected to a rotation shaft 4 housed in a nacelle 3, and the rotation shaft 4 rotates with the rotor 2. Then, rotation energy of the rotation shaft 4 is input to a generator 6 via a gear box 5, and electric power is generated in the generator 6. The nacelle 3 is provided atop a tower 7.

Also, each blade 2A is configured to be rotated in the direction of the arrow by a pitch-angle adjusting mechanism 9 which is operated under the control of a pitch controller 8, and thus pitch angle of each blade 2A is adjusted.

Further, the two-bladed wind turbine 1 comprises a rotor brake 20 for providing braking force to the rotor 2 or the rotation shaft 4 which rotates with the rotor 2. In one embodiment, the rotor brake 20 includes a brake disc 20A attached to the hub 2B, which is a part of the rotor 2, or the rotation shaft 4 which rotates with the rotor 2, and a brake caliper 20B which is configured to be capable of holding the brake disc 20A. In this case, braking force is applied to the rotor 2 by operating the brake caliper 20B to hold the brake disc 20A. In other embodiment, the rotor brake 20 is provided at an output shaft of the gear box 5 (an input shaft of the generator 6) which rotates with the rotor 2.

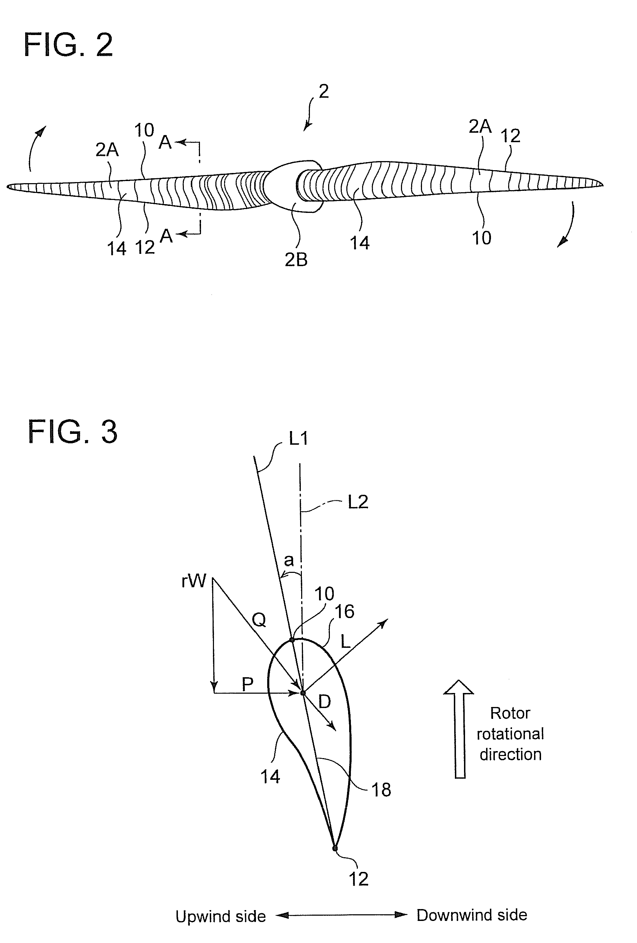

Fig. 2 is an illustration of a rotor of a wind turbine during electric generation according to one embodiment. Fig. 3 is a cross-sectional view taken along line A-A of Fig. 2.

As illustrated in Fig. 2, during electric generation by a wind turbine, the rotor 2 rotates in the direction of the arrow such that a positive pressure surface 14 of each blade 2A faces upwind, and a leading edge 10 is positioned upstream in the rotating direction in the rotational plane of the rotor. While Fig. 2 illustrates an up-wind wind turbine as one embodiment in which the rotor 2 is configured to face upwind during electric generation, the rotor 2 may be configured to face downwind during electric generation in other embodiment (down-wind wind turbines).

Each blade 2A, as shown in Fig. 3, has an airfoil in which a positive pressure surface 14 and a negative pressure surface 16 extend from a leading edge 10 to a trailing edge 12. The line 18 connecting the leading edge 10 and the trailing edge 12 is referred to as a chord.

During electric generation by a wind turbine, each blade 2A is oriented by a pitch-angle adjusting mechanism 9 which operates under the control of a pitch controller 8, so that the chord 18 forms an angle "a" with the direction of the rotor rotation. The angle "a" here is an angle formed between an extended line L1 of the chord 18 and a line L2 parallel to the direction of the blade rotation (rotor rotational plane), which indicates the pitch angle of the blades 2A. Typically, the pitch angle "a" of each blade 2A is substantially 0 degree during electric generation by a wind turbine.

In this specification, the plus and minus signs of the angle "a" are defined as follows: when the leading edge 10 faces upwind, the angle "a" is plus; and when the leading edge 10 faces downwind, the angle "a" is minus.

During electric generation by a wind turbine, the rotor 2 rotates in the direction of the arrow in the drawing. Thus, the wind of relative wind velocity vector Q acts on each blade 2A as shown in Fig. 3. The relative wind speed vector Q is obtained by combining vector P, which is a wind velocity vector of the wind blowing to the rotor rotational plane from a perpendicular direction and vector rW, which is a circumferential velocity vector of the rotor 2. As a result, each blade 2A receives lift L in the direction perpendicular to the relative wind speed vector Q, and drag D in the direction parallel to the relative wind velocity vector Q.

The lift L and the drag D acting on each blade 2A increase with the increase in the wind speed, and thus larger wind load acts on the blades 2A during violent wind.

In some embodiments, wind turbine 1 performs the following operation in order to reduce the wind load during violent wind.

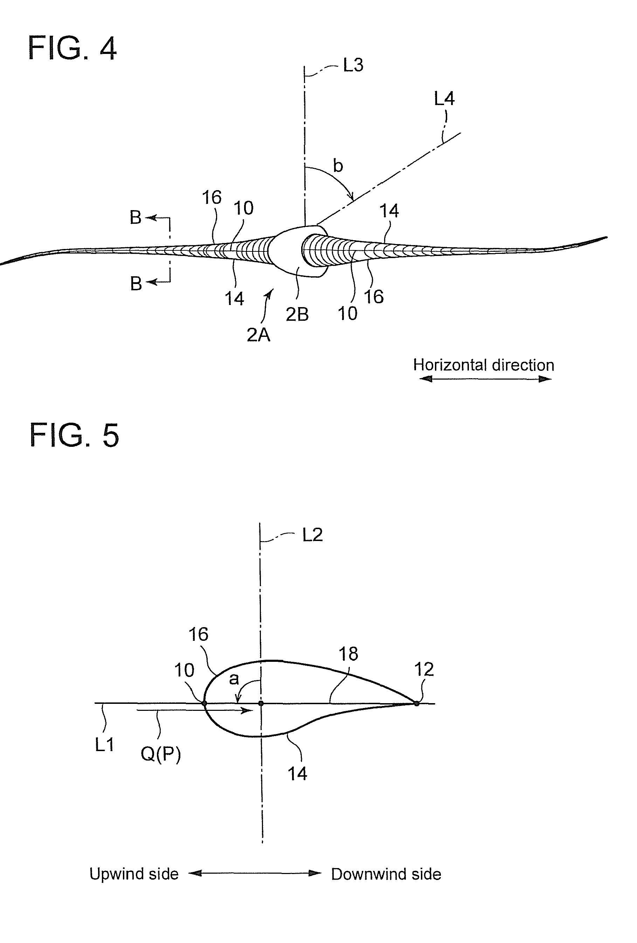

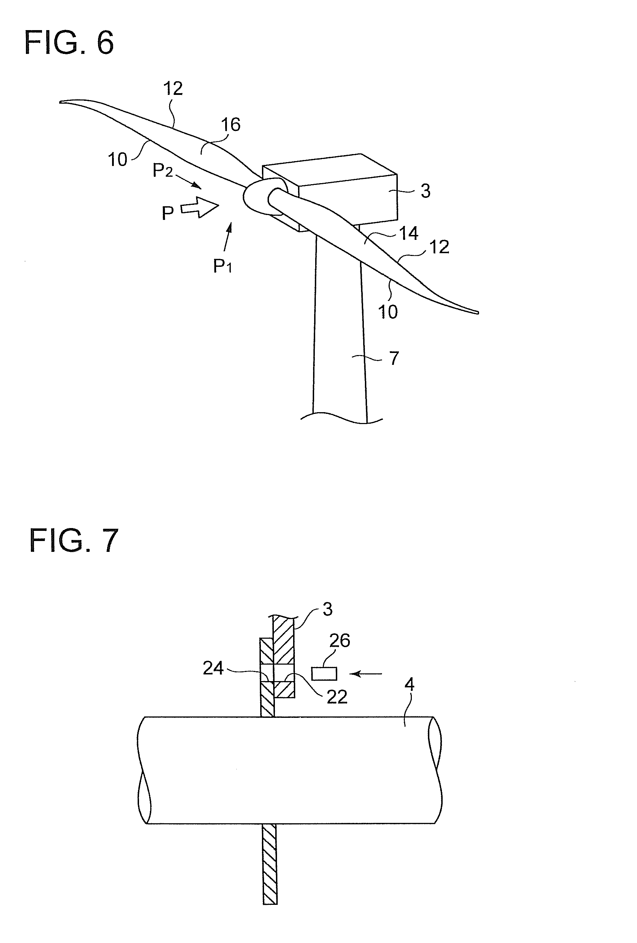

Fig. 4 is an illustration of a rotor during violent wind according to one embodiment. Fig. 5 is a cross-sectional view taken along line B-B of Fig. 4. Fig. 6 is a perspective view of a wind turbine during violent wind according to one embodiment.

In some embodiments, as shown in Figs. 4 and 5, a pitch-angle adjusting mechanism 9 is operated under the control of a pitch controller 8, and the pitch angle "a" of each blade 2A is adjusted so that the chord 18 of each of the two blades 2A is along the perpendicular direction to the rotor rotational plane (plane parallel to line L2) during violent wind. That is, the pitch angle "a" is increased using the pitch-angle adjusting mechanism 9 from approximately 0 degree, which is the pitch angle during electric generation by a wind turbine, to approximately 90 degrees. In one embodiment, the pitch angle "a" is adjusted in a range of not less than 80 degrees to not greater than 100 degrees, so that the angle between the chord 18 of each of the two blades 2A and the direction perpendicular to the rotor rotational plane is 10 degrees or less.

In this manner, an aerodynamic braking force acts on each blade 2A and the rotor 2 stops rotating. When the rotor 2 stops rotating, the relative wind velocity vector Q becomes substantially equal to the vector P, which is a wind velocity vector of the wind blowing from a substantially perpendicular direction to the rotor rotational plane. In this case, the angle of attack between the relative wind velocity vector Q (the wind velocity vector P) and the chord 18 is substantially 0 degree and lift coefficient and resistance coefficient decrease significantly, which leads to reduction of the lift L and the drag D. Accordingly, each blade 2A lets the wind blowing from the direction perpendicular to the rotor rotational plane through, thereby reducing wind load on the wind turbine.

In some embodiments, in addition to operating the above described pitch control to let the wind from the direction perpendicular to the rotor rotational plane through, the rotor 2 is held at an azimuth angle such that the longitudinal direction of each blade 2A is along the horizontal direction, as shown in Fig. 4. In one embodiment, the angle between the longitudinal direction of each of the two blades 2A and the horizontal direction is 5 degrees or less. That is, the blade 2A at the right side of the drawing is held at an azimuth angle of not less than 85 degrees and not greater than 95 degrees, while the blade 2A at the left side of the drawing is held at an azimuth angle of not less than -95 and not greater than -85 degrees.

Herein, an azimuth angle is a parameter which defines the angular position of the rotor in the rotor rotational plane, specifically, an angle to a line L3 which extends vertically upward from the hub 2. Hereafter, a plus sign will be prefixed to an azimuth angle which defines an angular position clockwise from the line L3, and a minus sign to an azimuth angle which defines an angular position counter-clockwise from the line L3. For instance, the line L4 in Fig. 4 is at an angular position of an azimuth angle of +b. In one embodiment illustrated in Fig. 4, the blade 2A at the right side of the drawing is at an angular position of an azimuth angle of 90 degrees, while the blade 2A at the left side of the drawing is at an angular position of an azimuth angle of -90 degrees.

As described above, during violent wind, it is possible to reduce generation of lift caused by the side wind P1 and P2 as shown in Fig. 6, even if the side wind P1 and P2 from directions other than a direction from the front of the rotor 2 act on each of the blades 2A besides wind P from the front of the rotor 2, by holding the rotor 2 at the azimuth angle such that each blade 2A is substantially parallel to the horizontal direction.

In some embodiments, the rotor 2 is held at the above described azimuth angle (the azimuth angle at which the longitudinal direction of each blade 2A is substantially parallel to the horizontal direction) by using at least a braking force of a rotor brake 20 applied to the rotor 2 or to the rotation shaft 4 rotating with the rotor 2. Also, in another embodiment, instead of/in addition to the braking force of the rotor brake 20, a lock pin is used, which locks the rotor 2 or the rotation shaft 4 which rotates with the rotor 2 to a stationary member side of the two-bladed wind turbine 1.

In one embodiment, as shown in Fig. 7, the rotor 2 is held at the above azimuth angle by inserting a lock pin 26 into the first hole 22 of the side of the stationary member of the two-bladed wind turbine 1 and the second hole 24 of the side of the rotor 2. Herein, the stationary member at which the first hole 22 is provided may be a part of the components of the nacelle 3. Also, it is acceptable as long as the second hole 24 is provided at a member which rotates with the rotor 2. For example, the second hole 24 may be provided at the hub 2B, the rotation shaft 4 connected to the hub 2B, or the output shaft of the gear box 5 (the input shaft of the generator 6).

In this manner, it is possible to securely hold the rotor at the above described azimuth angle by maintaining the rotor 2 substantially stationary by using at least one of the rotor brake 20 or the lock pin 26.

In some embodiments, the rotor 2 is held at the above azimuth angle utilizing restoring force caused by gravity forces working on the two blades 2A, instead of/in addition to mechanical means which uses the rotor brake 20, the lock pin 26, or the like.

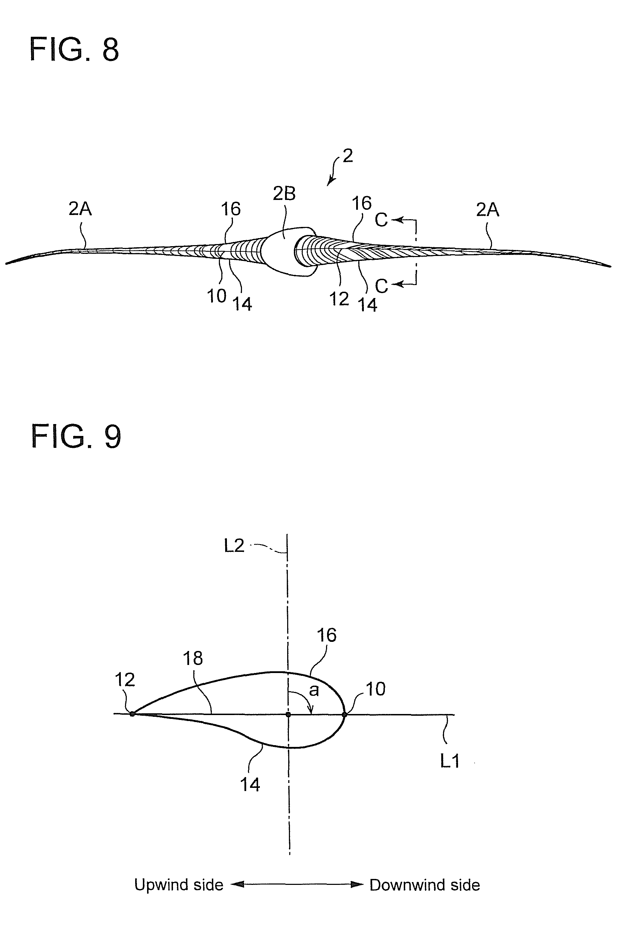

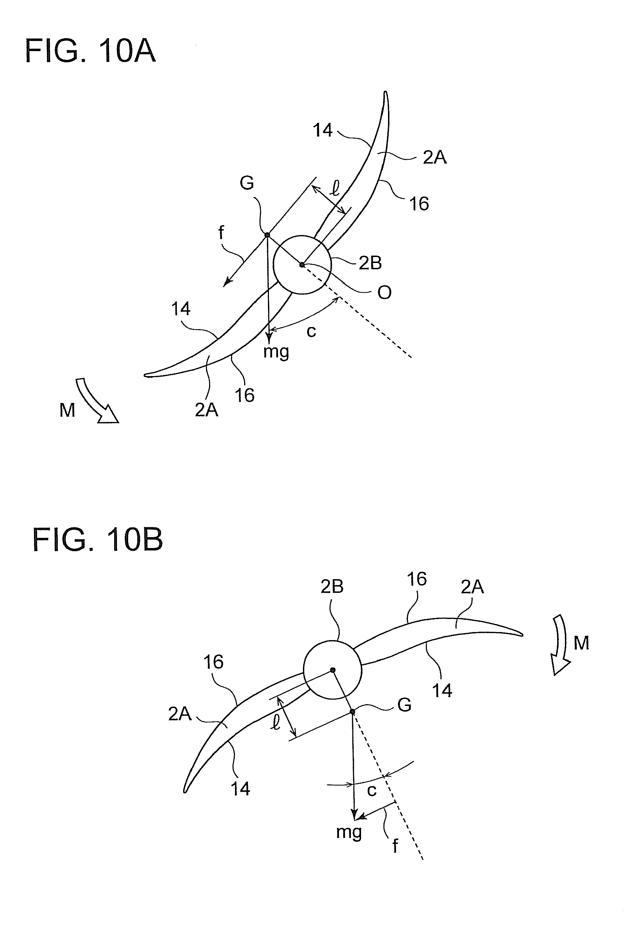

Fig. 8 is an illustration of a rotor during violent wind according to one embodiment. Fig. 9 is a cross-sectional view taken along line C-C of Fig. 8. Figs. 10A and 10B are illustrations of the generation mechanism of restoring force caused by gravity forces on the two blades.

In some embodiments, in a case where a two-bladed wind turbine is of an up-wind type (a wind turbine configured so that the rotor faces upwind during electric generation), tip portions of the two blades have a shape in which tip portions 2A bend in a direction from the side of negative pressure surfaces 16 to the side of positive pressure surfaces 14. During electric generation by a wind turbine, the pitch angles are controlled so that the positive pressure surface 14 of each blade 2A faces upwind in the situation where the rotor 2 faces upwind. On the other hand, during violent wind, the pitch angle "a" of each blade 2A is adjusted so that the chords 18 of the two blades 2A are substantially along the perpendicular direction to the rotor rotational plane as shown in Fig. 8, by operating the pitch-angle adjusting mechanism 9 under the control of the pitch controller 8. In this step, the pitch angle "a" of one blade 2A is set to approximately 90 degrees (e.g. not less than 80 degrees and not greater than 100 degrees) and the pitch angle "a" of other blade 2A is set to approximately -90 degrees (e.g. not less than -100 degrees and not greater than -80 degrees).

In one illustrative embodiment shown in Fig.8, the blade 2A at the left side of the drawing has the pitch angle "a" of approximately 90 degrees and the leading edge 10 faces upwind, while the blade 2B at the right side of the drawing has the pitch angle "a" of approximately -90 degrees and the trailing edge 12 faces upwind.

In one embodiment, an angle between the chord 18 of each of the two blades 2A and the perpendicular direction to the rotor rotational plane is set to 10 degrees or less by adjusting the pitch angle "a" of one blade 2A in a range from not less than 80 degrees to not greater than 100 degrees and the pitch angle "a" of the other blade 2A in a range from not less than -100 degrees to not greater than -80 degrees.

As a result of the above described pitch control, the rotor 2 as a whole is has a configuration in which tip portions of the two blades 2A are directed in the same direction ("the bending direction" is the same) as shown in Fig. 8. Thus, as shown in Figs. 10A and 10B, the gravity center G of the rotor 2 shifts toward the side of the positive pressure surfaces 14 from the rotation center O of the rotor 2. Thus, moment M (a restoring force) which is calculated as the product of the component f, a perpendicular component to the segment OG resolved from gravity force mg of the two blades 2A acting on the position of the gravity center G, and the length 1 of the segment OG, occurs and acts to rotate the rotor 2. Accordingly, the angular position of the rotor 2 is stably held at the azimuth angle such that each blade 2A is along the horizontal direction and the positive pressure surface 14 of each blade 2A faces vertically downward, by the restoring force M caused by gravity forces acting on the two blades 2A.

Further, pre-bent blades for up-wind wind turbines may be used as the blades 2A which include tip portions curved as described in Fig. 8. The pre-bent blades for up-wind wind turbines have tip portions bent toward the positive pressure surfaces 14 which face upwind during electric generation by a wind turbine for the purpose of, for instance, preventing the blades 2A from contacting the tower even in a situation where the blades 2A warped due to wind load. By using pre-bent blades for up-wind wind turbines, it is possible to hold the rotor 2 easily at an azimuth angle appropriate for withstanding violent wind by merely performing the pitch control described in Fig. 8.

In some embodiments, the rotor 2 is moved downward during violent wind in order to further reduce wind load. Since wind has a tendency to have higher wind speed at higher altitude, it is possible to reduce the wind load more efficiently by moving the rotor 2 downward during violent wind.

In some embodiments, the two-bladed wind turbine 1 is an offshore wind turbine which includes at least one pair of floats floating on sea surface and at least one pair of towers for supporting together the rotor 2, each of the at least one pair of towers being installed on each of the at least one pair of floats, and the rotor 2 is moved downward by distancing the at least one pair of floats from each other and rotating each of the at least one pair of towers around an end at the side of the rotor 2 of said each of the at least one pair of the towers.

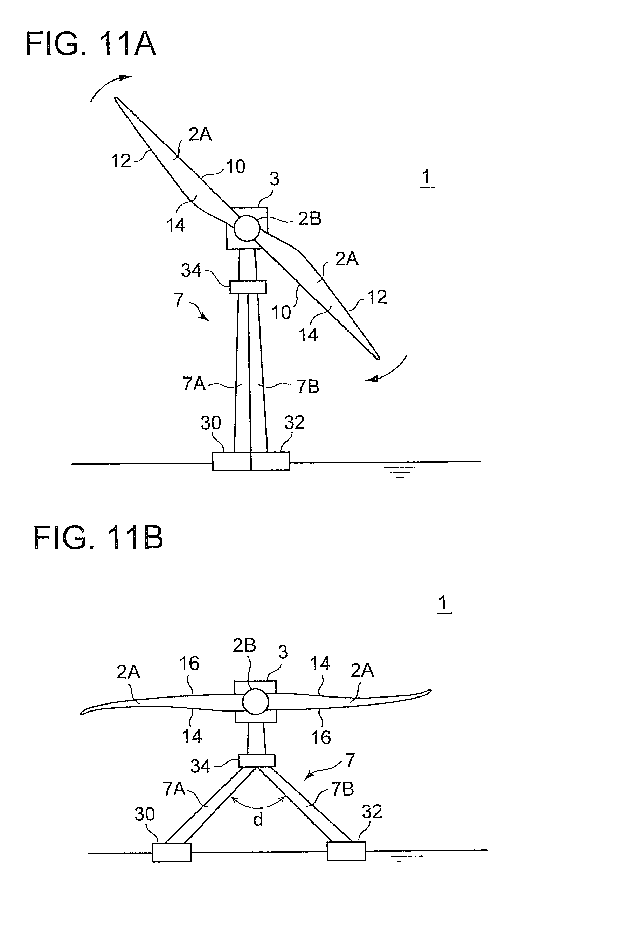

Figs. 11A and 11B are illustrations of a two-bladed wind turbine according to one embodiment, in which a rotor can be moved downward.

In one illustrative embodiment shown in Figs. 11A and 11B, the two-bladed wind turbine 1 includes a first float 30 and a second float 32, and a first tower part 7A and a second tower part 7B for supporting the rotor 2 via the nacelle. Each of the first tower part 7A and the second tower part 7B is installed on a corresponding one of the first float 30 and the second float 32. The end parts (upper end parts) at the side of the rotor 2 of the first tower part 7A and the second tower part 7B are attached to the connecting part 34 rotatably.

During electric generation by a wind turbine, as shown in Fig. 11A, the first float 30 and the second float 32 are positioned adjacent to each other. The first tower part 7A and the second tower part 7B are substantially parallel and the rotor 2 is positioned at a high position appropriate for electric generation. Herein, the pitch angle of each blade 2A is adjusted so that the positive pressure surfaces 14 face upwind. That is, the pitch angle "a" (see Fig. 3) is approximately 0 degree.

On the other hand, during violent wind, as shown in Fig. 11B, the first float 30 and the second float 32 are distanced from each other and the first tower part 7A and the second tower part 7B are rotated around the end parts at the side of the rotor 2 (the connecting part 34). Thus, the angle "d" between the first tower 7A and the second tower 7B increases. As a result, the rotor 2 moves downward from a high position appropriate for electric generation to a low position appropriate for withstanding violent wind. When rotating the first tower part 7A and the second tower part 7B, an arbitrary drive mechanism provided between the first tower part 7A and the second tower part 7B may be used.

In another embodiment, the two-bladed wind turbine 1 is an offshore wind turbine configured so that it is possible to move the rotor 2 downward by sinking at least a part of the tower 7 of the offshore wind turbine underwater.

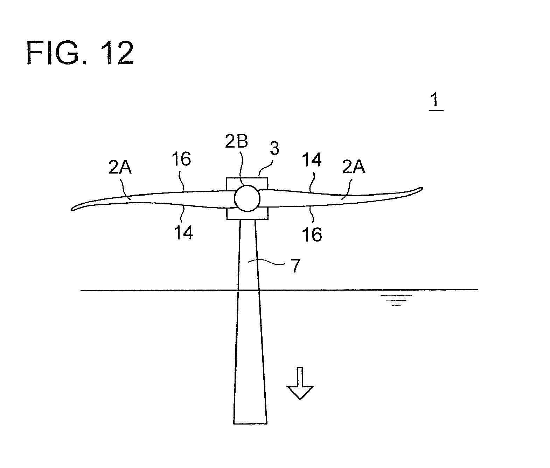

Fig. 12 is an illustration of a two-bladed wind turbine according to one embodiment, in which the rotor 2 can be moved downward. As shown in Fig. 12, the two-bladed wind turbine 1 is configured so that it is possible to sink at least a part of the tower 7 underwater during violent wind. Thus, the rotor 2 can be moved downward from a high position appropriate for electric generation to a low position appropriate for withstanding violent wind.

Ballast water (e.g. seawater) may be injected inside the tower 7 of sealed configuration for sinking a part of the tower 7 undersea.

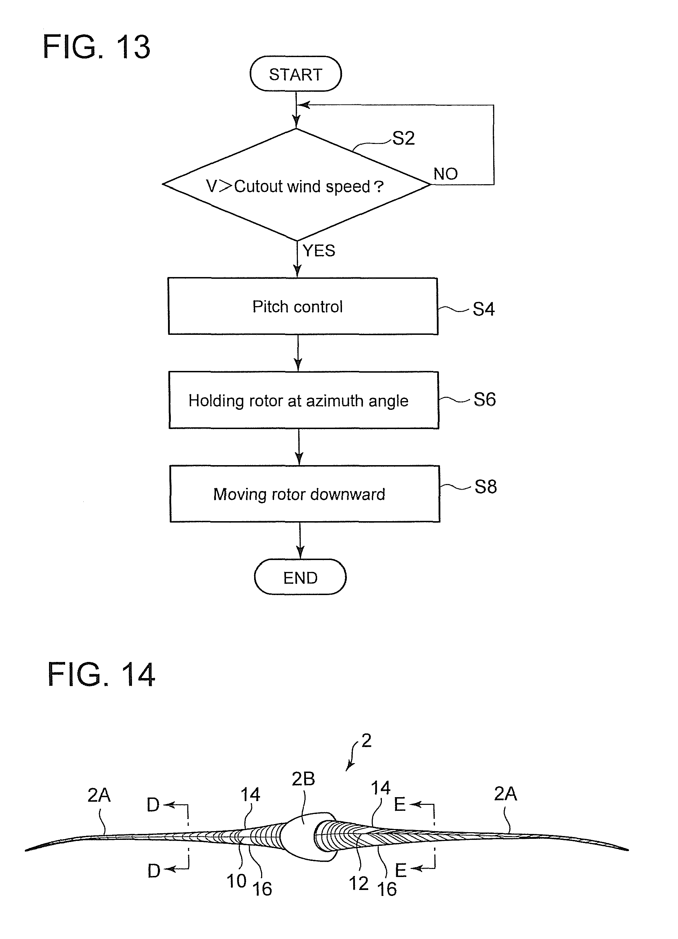

Next, the operation method of the above described two-bladed wind turbine during violent wind will be described. Fig. 13 is a flow chart of the operation process of the two-bladed wind turbine 1 during violent wind. In the illustrative embodiment shown in Fig. 13, steps S4, S6, and S8 are performed in this order. However, the order of the steps may be changed.

As shown in Fig. 11, it is firstly determined whether the wind speed V of the wind acting on the two-bladed wind turbine 1 is higher than the cutout wind speed (step S2). While the wind speed V does not exceed the cutout wind speed, step S2 is repeated. In contrast, when the wind speed V exceeds the cutout wind speed ("YES" in step S2), the process advances to step S4 to adjust the pitch angles "a" of the two blades 2A so that the chords 18 are along the perpendicular direction to the rotational plane of the rotor 2, by operating the pitch-angle adjusting mechanism 9 under the control of the pitch controller 8. In some embodiments, the angle between the chord 18 of each blade 2A and the perpendicular direction to the rotational plane of the rotor 2 is adjusted to 10 degrees or less. In one embodiment, the pitch angles "a" of the two blades 2A are set to a value not less than 80 degrees and not greater than 100 degrees. In another embodiment, the pitch angle "a" of one of the blades 2A is set to a value not less than 80 degrees and not greater than 100 degrees while the pitch angle "a" of the other blade 2A is set to a value not less than -100 degrees and not greater than -80 degrees.

Then, in step 6, the rotor 2 is held at an azimuth angle such that the longitudinal directions of two blades 2A are along the horizontal direction.

In some embodiments, the rotor is mechanically held substantially stationary by using at least one of the rotor brake 20 or the lock pin 26.

In another embodiment, the rotor 2 is held at the above azimuth angle using restoring force caused by gravity forces working on the two blades 2A, instead of/in addition to mechanical means which uses the rotor brake 20, the lock pin 26, or the like. Specifically, tip portions of two blades 2A are bent in advance in a direction from the side of the negative pressure surfaces 16 to the side of the positive pressure surfaces 14, and the pitch angle "a" of one blade 2A is set to approximately 90 degrees while the pitch angle "a" of the other blade 2A is set to approximately -90 degrees. In this manner, the rotor 2 as a whole has a configuration as shown in Fig. 8, in which the tip portions of the two blades 2A curve in the same direction. Thus, as shown in Figs. 10A and 10B, the gravity center G of the rotor 2 shifts toward the side of the positive pressure surfaces 14 from the rotation center O of the rotor 2. Accordingly, the angular position of the rotor 2 is stabilized at the azimuth angle such that each blade 2A is along the horizontal direction and the positive pressure surface 14 of each blade 2A faces vertically downward, by the restoring force M caused by gravity forces acting on the two blades 2A.

In some embodiments, the rotor 2 is moved downward during violent wind for further reducing wind load (step 8).

In one embodiment, the two-bladed wind turbine 1 includes at least one pair of floats 30 and 32 floating on sea surface and at least one pair of towers 7A and 7B for supporting together the rotor 2, each of the at least one pair of towers being installed on each of the at least one pair of floats 30 and 32, and the rotor 2 is moved downward by distancing the at least one pair of floats 30 and 32 from each other and rotating each of the at least one pair of 7A and 7B around an end (connecting part 34) at the side of the rotor 2 of said each of the at least one pair of the towers 7A and 7B.

In other embodiment, the two-bladed wind turbine 1 is an offshore wind turbine configured so that it is possible to move the rotor 2 downward by sinking at least a part of the tower 7 of the offshore wind turbine 1 underwater. Herein, ballast water (e.g. seawater) may be injected inside the tower 7 of sealed configuration for sinking a part of the tower 7 undersea.

As described above, according to one embodiment of the present invention, during violent wind, it is possible to let wind from the front of the rotor 2 through by controlling pitch angle of each blade so that the chords 18 of the two blades 2A of the two-bladed wind turbine 1 are along the perpendicular direction to the rotational plane of the rotor. Also, during violent wind, it is possible to reduce lifting force caused by side wind from a direction other than a direction from the front of the rotor 2, by holding the rotor 2 at an azimuth angle such that each blade is along the horizontal direction. Thus, it is possible to the reduce wind load efficiently during violent wind.

While the embodiments of the present invention have been described, it is obvious to those skilled in the art that various changes and modifications may be made without departing from the scope of the invention. For instance, some of the above described embodiments can be combined.

For instance, while the illustrative embodiment shown in Figs. 8 and 9 is on the premise that a two-bladed wind turbine is an up-wind wind turbine, similar pitch control is performed in another embodiment for a down-wind wind turbine as a two bladed wind turbine.

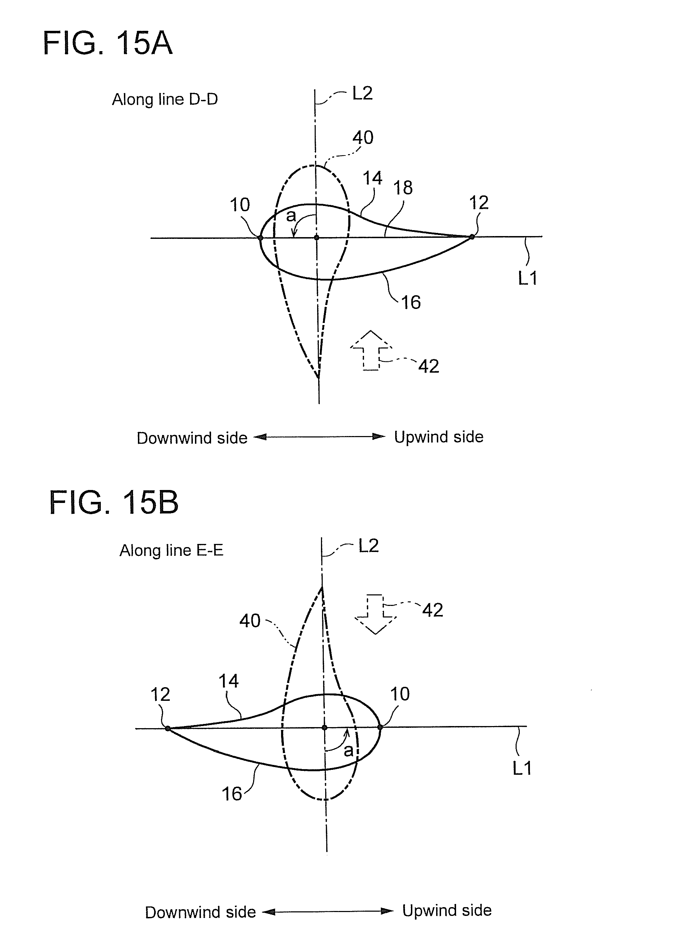

Fig. 14 is an illustration of a rotor during violent wind according to one embodiment. Fig. 15A is a cross-sectional view taken along line D-D of Fig. 14, and Fig. 15B is a cross-sectional view taken along line E-E of Fig. 14.

In some embodiments, in a case where a two bladed wind turbine is a down-wind wind turbine, tip portions of the two blades 2A bend in the direction from the side of the positive pressure surfaces 14 from the side of the negative pressure surfaces 16. During electric generation by a wind turbine, the pitch angles are controlled so that the positive pressure surface of each blade 2A faces upwind in the situation where the rotor 2 faces downwind. On the other hand, during violent wind, the pitch angle "a" of each blade 2A is adjusted so that the chords 18 of the two blades 2A are along the perpendicular direction to the rotor rotational plane as shown in Fig. 14, by operating the pitch-angle adjusting mechanism 9 under the control of the pitch controller 8. That is, as shown in Figs. 15A and 15B, the blades 2A, which have been arranged as shown by reference sign 40 during electric generation by a wind turbine, are rotated during violent wind so that the chords 18 are along the direction perpendicular to L2, a line parallel to the blade rotating direction. On this occasion, the pitch angle "a" of one blade 2A is set to approximately 90 degrees (e.g. not less than 80 and not greater than 100 degrees) and the pitch angle "a" of other blade 2A is set to approximately -90 degrees (e.g. not less than -100 and not greater than -80 degrees).

In the illustrative embodiment shown in Fig.14, the blade 2A at the left side of the drawing has the pitch angle "a" of approximately -90 degrees and the trailing edge 12 faces upwind (Fig. 15A). In contrast, the blade 2A at the right side of Fig. 14 has the pitch angle "a" of approximately 90 degrees and the leading edge 10 faces upwind (Fig. 15B).

In one embodiment, the angle between the chord 18 of each of the two blades 2A and the perpendicular direction to the rotor rotational plane is adjusted to 10 degrees or less by adjusting the pitch angle "a" of one blade 2A in a range from not less than 80 degrees and not greater than 100 degrees, and the pitch angle "a" of the other blade 2A in a range of not less than -100 degrees and not greater than -80 degrees.

As a result of the above described pitch control, the rotor 2 as a whole has a configuration in which tip portions of the two blades 2A curve in the same direction (vertically downward) as shown in Fig. 14. Thus, the angular position of the rotor 2 is stably held at the azimuth angle such that each blade 2A is along the horizontal direction and the negative pressure surface 16 of each blade 2A faces vertically downward, by restoring force caused by gravity forces acting on the two blades 2A.

Herein, pre-bent blades for down-wind wind turbines may be used as the blades 2A which include tip portions curved as described in Fig. 14. The pre-bent blades for down-wind wind turbines have tip portions bent toward the side of negative pressure surfaces 16 which face downwind during electric generation by a wind turbine for the purpose of, for instance, preventing the blades 2A from contacting the tower 7 under the condition where the blades 2A warped due to wind load. By using pre-bent blades for down-wind wind turbines, it is possible to hold the rotor 2 easily at an azimuth angle appropriate for withstanding violent wind by merely performing the pitch control described in Fig. 14.

### [Reference Signs List]

- 1: Two-bladed wind turbine
- 2: Rotor
- 2A: Blade
- 2B: Hub
- 3: Nacelle
- 4: Rotation shaft
- 5: Drive train
- 6: Generator
- 7: Tower
- 8: Pitch controller
- 9: Pitch-angle adjusting mechanism
- 10: Leading edge
- 12: Trailing edge
- 14: Positive pressure surface
- 16: Negative pressure surface
- 18: Chords
- 20: Rotor brake
- 20A: Brake disc
- 20B: Brake caliper
- 22: First hole
- 24: Second hole
- 26: Lock pin
- 30: First float
- 32: Second float
- 34: Connecting part

## Claims

1. An operating method for a two-bladed wind turbine (1) which comprises a rotor (2) including two blades (2A) and a hub (2B) to which the two blades (2A) are coupled, the operating method being **characterized in that** it comprises:
a pitch-angle adjusting step of adjusting pitch angles (a) of the two blades (2A) such that chords (18) of the two blades (2A) are substantially parallel to a perpendicular direction to a rotational plane (L2) of the rotor (2) during violent wind; and
a rotor holding step of holding the rotor (2) at an azimuth angle (b) such that the two blades (2A) are substantially parallel to a horizontal direction during the violent wind.

2. The operating method according to claim 1, wherein
in the rotor holding step, the rotor (2) is held at the azimuth angle (b) by using at least a braking force of a rotor brake (20) applied to the rotor or a rotation shaft which is configured to rotate with the rotor.

3. The operating method according to claims 1 or 2, wherein
in the rotor holding step, the rotor (2) is held at the azimuth angle (b) by using at least a lock pin (26) for locking the rotor (2) or a rotation shaft (4) which is configured to rotate with the rotor to a stationary member side of the two-bladed wind turbine (1).

4. The operating method according to any one of claims 1 to 3,
wherein the two-bladed wind turbine (1) is an up-wind wind turbine,
wherein tip portions of the two blades (2A) bend in a direction from a negative pressure surface (16) toward a positive pressure surface (14),
wherein, in the pitch-angle adjusting step, the pitch angle (a) is adjusted such that the positive pressure surfaces (14) of the two blades (2A) face vertically downward, and
wherein, in the rotor holding step, the rotor (2) is held at the azimuth angle (b) by using at least a restoring force (M) caused by gravity forces on the two blades (2A), the positive pressure surfaces (14) of which are facing vertically downward.

5. The operating method according to any one of claims 1 to 3,
wherein the two-bladed wind turbine (1) is a down-wind wind turbine,
wherein tip portions of the two blades bend in a direction from a positive pressure surface (14) toward a negative pressure surface (16),
wherein, in the pitch-angle adjusting step, the pitch angle (a) is adjusted such that the negative pressure surfaces (16) of the two blades (2A) face vertically downward, and
wherein, in the rotor holding step, the rotor (2) is held at the azimuth angle (b) by using at least a restoring force (M) caused by gravity forces on the two blades (2A), the negative pressure surfaces (16) of which are facing vertically downward.

6. The operating method according to any one of claims 1 to 5, wherein, in the pitch-angle adjusting step, an angle between the chord (18) of each of the two blades (2A) and the perpendicular direction is adjusted to 10 degrees or less.

7. The operating method according to any one of claims 1 to 6, wherein, in the rotor holding step, an angle between a longitudinal direction of each of the two blades (2A) and the horizontal direction is adjusted to 5 degrees or less.

8. The operating method according to any one of claims 1 to 7, further comprising:
a rotor moving step of moving the rotor (2) downward during violent wind.

9. The operating method according to claim 8,
wherein the two-bladed wind turbine is an offshore wind turbine comprising at least one pair of floats (30, 32) floating on sea surface and at least one pair of towers (7A, 7B) for supporting together the rotor (2), each of the at least one pair of towers being installed on each of the at least one pair of floats (30, 32), and
wherein, in the rotor moving step, the rotor (2) is moved downward by distancing the at least one pair of floats (30, 32) from each other and rotating each of the at least one pair of towers (7A, 7B) around a rotor-side end of said each of the at least one pair of the towers.

10. The operating method according to claim 8,
wherein the two-bladed wind turbine is an offshore wind turbine, and
wherein, in the rotor moving step, the rotor (2) is moved downward by sinking at least a part of a tower (7) of the offshore wind turbine undersea.

11. A two-bladed wind turbine **characterized in that** it comprises:
a rotor (2) including two blades (2A) and a hub (2B) to which the two blades (2A) are coupled,
a pitch-angle adjusting mechanism (9) for adjusting pitch angles (a) of the two blades (2A),
a pitch controller (8) for controlling the pitch-angle adjusting mechanism (9) such that chords (18) of the two blades (2A) are substantially parallel to a perpendicular direction to a rotational plane of the rotor (2) during violent wind, and
a rotor holding mechanism for holding the rotor (2) at an azimuth angle (b) such that the two blades (2A) are substantially parallel to a horizontal direction during violent wind.

12. A two-bladed wind turbine of up-wind type **characterized in that** it comprises:
a rotor (2) including two blades (2A) each of which has a tip portion that bends in a direction from a negative pressure surface (16) toward a positive pressure surface (14), and a hub (2B) to which the two blades (2A) are coupled;
a pitch-angle adjusting mechanism (9) for adjusting pitch angles (a) of the two blades (2A); and
a pitch controller (8) for controlling the pitch-angle adjusting mechanism (9) such that the positive pressure surfaces (14) of the two blades (2A) face vertically downward during violent wind.

13. A two-bladed wind turbine of down-wind type **characterized in that** it comprises:
a rotor (2) including two blades (2A) each of which has a tip portion that bends in a direction from a positive pressure surface (14) toward a negative pressure surface (16), and a hub (2B) to which the two blades are coupled;
a pitch-angle adjusting mechanism (9) for adjusting pitch angles (a) of the two blades (2A); and
a pitch controller (8) for controlling the pitch-angle adjusting mechanism (9) such that the negative pressure surfaces (16) of the two blades (2A) face vertically downward during violent wind.
